# FASCICULE DE BREVET EUROPEEN

(11) **EP 1 085 627 B1**
(45) Date de publication et mention de la délivrance du brevet: **26.03.2008**
(21) Numéro de dépôt: 00410107.7
(22) Date de dépôt: 30.08.2000
(51) Int. Cl.: H02B 1/01

(54) **Châssis avec dispositif de raccordement d'angle, notamment pour une armoire électrique**
Metallrahmen mit Eckverbindung, insbesondere für einen Schaltschrank
Metallic frame with corner connection, especially for an electrical cabinet

(30) Priorité: 15.09.1999 FR 9911693
(43) Date de publication de la demande: 21.03.2001
(73) Titulaire: SCHNEIDER ELECTRIC INDUSTRIES SAS, 92500 Rueil-Malmaison (FR)
(72) Inventeur: Carle, Pierre, 38050 Grenoble cedex 09 (FR); Laboch, Kazimir, 38050 Grenoble cedex 09 (FR); Pin, Jean-Pierre, 38050 Grenoble cedex 09 (FR)
(74) Mandataire: Broydé, Marc

(56) Documents cités:
- EP-A- 0 866 531
- US-A- 5 228 762

## Description

### Domaine technique de l'invention

L'invention est relative à un châssis à ossature métallique en forme de parallélépipède rectangle, notamment pour une armoire électrique, comprenant : des montants verticaux en forme de piliers assemblés à des traverses s'étendant dans la direction de la profondeur du châssis pour constituer sur les côtés opposés deux cadres quadrangulaires à base de profilés, des pièces de jonction disposées aux angles du châssis pour l'interconnexion des montants aux traverses, chaque pièce de jonction étant conformée selon un bipode comportant un premier élément d'emboîtement disposé en équerre par rapport à un deuxième élément d'emboîtement, et des longerons horizontaux s'étendant dans la direction de la largeur de l'armoire pour assurer la liaison mécanique entre les deux cadres.

### Etat de la technique

Le document EP 866531 de la demanderesse décrit un châssis d'armoire électrique dans lequel les longerons sont montés sur les montants par un système de fixation à coin hyperstatique.

Selon un autre châssis connu, on utilise des tripodes comme pièces de jonction pour assembler les montants, traverses et longerons. Le raccordement des câbles à l'armoire reste difficile, car les éléments constitutifs du châssis sont indémontables.

### Objet de l'invention

L'objet de l'invention consiste à réaliser un châssis d'armoire électrique facile à monter, ayant une bonne tenue mécanique, et facilitant le raccordement des câbles.

Le but de l'invention est atteint grâce au châssis présentant les caractéristiques énoncées à la revendication 1.

**Dans le** dispositif selon l'invention, chaque pièce de jonction est équipée de moyens de positionnement dans la partie commune intermédiaire pour la fixation du longeron correspondant, lesdits moyens de positionnement comprenant au moins une paire de faces d'appui disposées en V en délimitant un coin à angle aigu dans lequel s'imbrique le longeron de forme conjuguée, et une vis de serrage progressif du longeron sur le coin du bipode. **Le longeron comporte un profilé en W ayant à chaque extrémité un orifice pour l'introduction de la vis de serrage.**

Selon un mode de réalisation préférentiel, le coin présente une section trapézoïdale, ouverte à l'avant et fermée à l'arrière par un fond. Un trou taraudé est ménagé au centre de la partie commune pour recevoir la vis de serrage. Le sommet fictif de l'angle aigu du coin est placé dans l'alignement du trou taraudé.

Selon une caractéristique de l'invention, l'angle aigu du coin est compris entre 20° et 40°. On obtient ainsi une pression de contact optimum du longeron sur le coin, tout en facilitant un démontage ultérieur.

Selon une autre caractéristique de l'invention, un joint d'étanchéité peut aussi être interposé entre le longeron et la partie commune de chaque pièce de jonction.

Les longerons peuvent être réalisés en aluminium ou en acier.

### Description sommaire des dessins

Les avantages et caractéristiques de l'invention ressortiront plus clairement de la description qui va suivre d'un mode de réalisation de l'invention, donné à titre d'exemple non limitatif et représenté aux dessins annexés dans lesquels :
- la figure 1 est une vue en perspective du châssis selon l'invention ;
- la figure 2 montre une vue de profil selon la flèche F de la figure 1 ;
- la figure 3 représente une vue éclatée en perspective du système d'assemblage d'un longeron sur l'un des cadres du châssis ;
- la figure 4 est une vue identique de la figure 3 en position montée du longeron ;
- la figure 5 montre une vue de profil de la figure 4 ;
- la figure 5A illustre le diagramme de la pression de contact du longeron sur le bipode en fonction de la valeur de l'angle aigu du coin ;
- la figure 6 est une vue en perspective à échelle agrandie d'une pièce de jonction à bipode selon l'invention ;
- la figure 7 représente une vue identique de la figure 3 d'une variante de réalisation ;
- les figures 8 et 9 montrent des vues en coupe du longeron avec deux autres profilés en acier.

### Description d'un mode de réalisation préférentiel

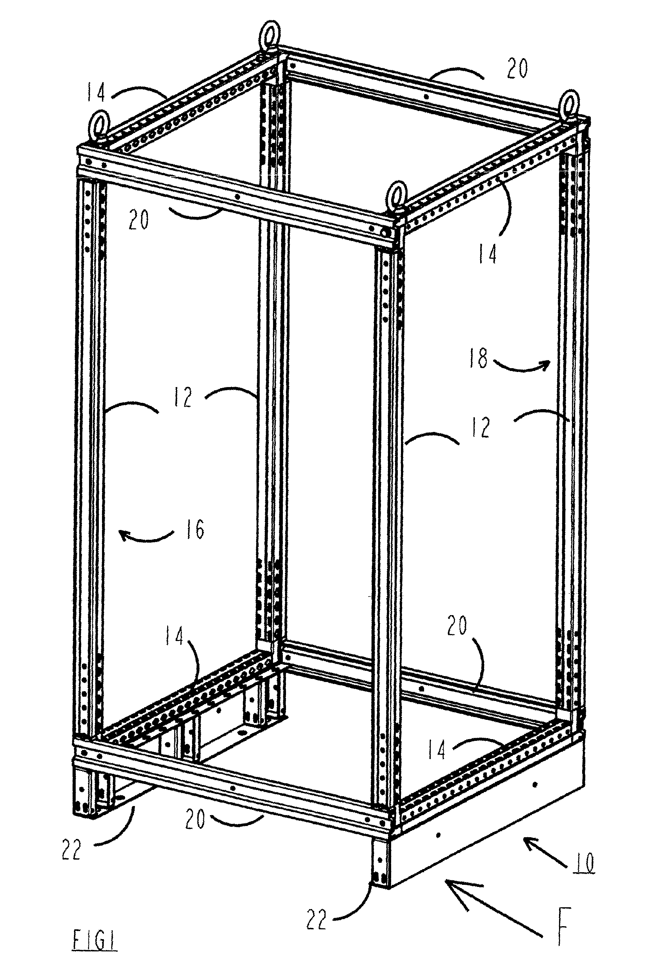

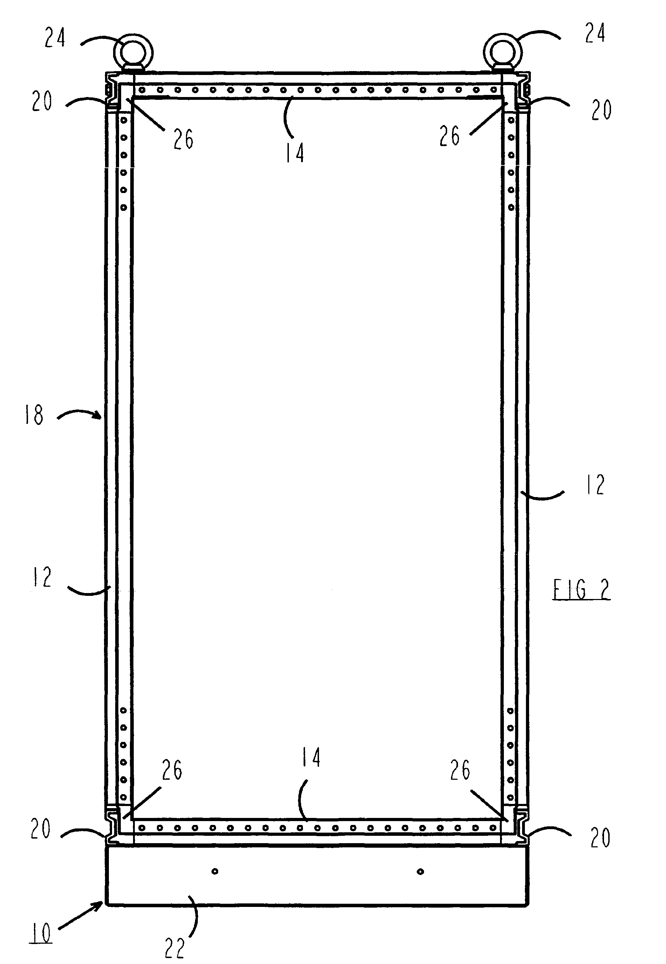

En référence aux figures 1 et 2, un châssis 10 métallique d'une armoire électrique présente une ossature à profil de parallélépipède rectangle comportant des montants 12 verticaux en forme de piliers assemblés à des traverses 14 parallèles s'étendant dans la direction de la profondeur du châssis 10 pour constituer deux cadres 16, 18 quadrangulaires sur les côtés opposés. Les deux cadres 16, 18 latéraux sont interconnectés par des longerons 20 horizontaux perpendiculaires aux traverses 14 et s'étendant parallèlement entre eux dans la direction de la largeur de l'armoire. L'ossature repose à la partie inférieure sur un socle 22 destiné à prendre appui sur le sol, et est pourvue d'anneaux de levage 24 aux quatre angles de la partie supérieure, un seul anneau 24 étant représenté sur la figure 2. Les montants 12 et traverses 14 sont formés par des profilés creux rectilignes en acier équipés d'une série de trous espacés à intervalles réguliers.

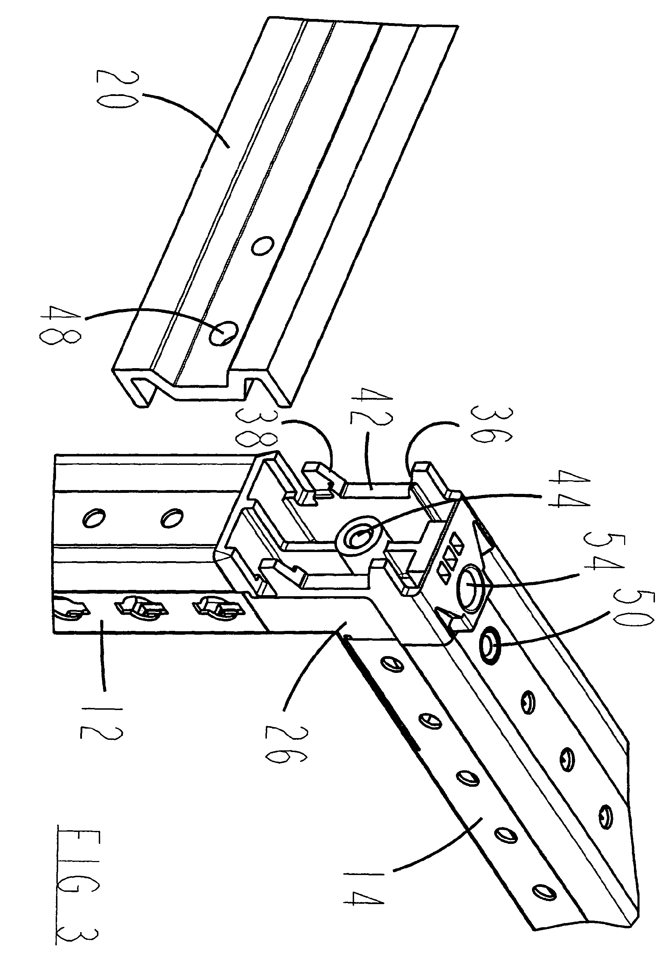

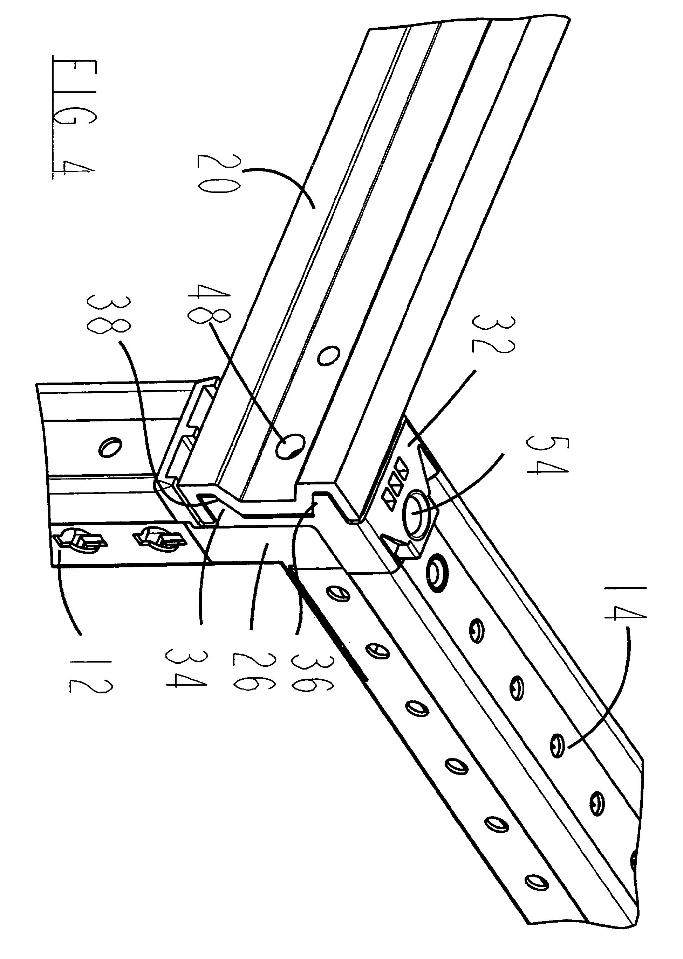

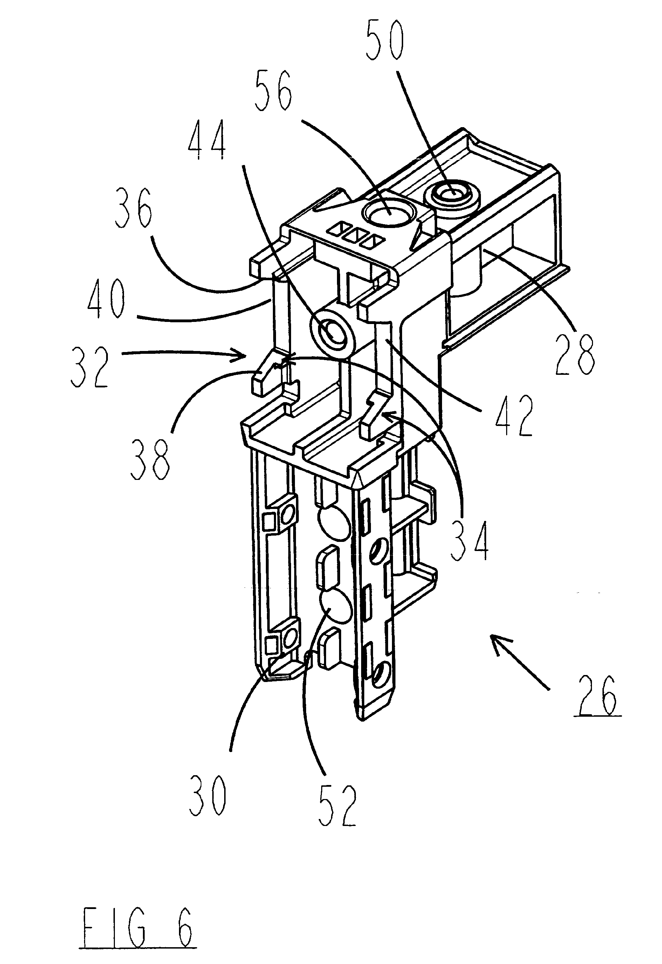

Sur les figures 3 à 7, chaque montant 12 est assemblé à la traverse 14 correspondante par une pièce de jonction 26, représentée en détail à la figure 6.
La structure du châssis 10 nécessite quatre pièces de jonction 26 identiques aux quatre coins de chaque cadre 16, 18. Chaque pièce de jonction 26 est agencée selon un bipode, comportant un premier élément d'emboîtement 28 destiné à s'engager dans une extrémité d'une traverse 14, et un deuxième élément d'emboîtement 30 destiné à être introduit dans une extrémité d'un montant 12 de manière à réaliser un assemblage à équerre. Les deux éléments d'emboîtement 28, 30 sont formés par des plots s'étendant perpendiculairement l'un par rapport à l'autre, et faisant saillie d'une partie commune 32 intermédiaire.

La partie commune 32 de chaque pièce de jonction 26 est dotée de moyens de positionnement 34 servant à la fixation d'une extrémité de longeron 20. Les moyens de positionnement 34 sont constitués par au moins une paire de faces d'appui 36, 38 disposées en V en délimitant un coin 40 de section trapézoïdale, ouvert à l'avant et fermé à l'arrière par un fond 42. Les faces d'appui 36, 38 obliques du coin 40 forment un angle aigu apte à obtenir un effort de serrage prédéterminé du longeron 20. Un trou 44 taraudé est ménagé au centre de la partie commune 32, et est susceptible de recevoir une vis 46 de fixation du longeron 20. Le sommet fictif de l'angle aigu du coin 40 est placé dans l'alignement avec la direction du trou 44 et de la vis 46 de serrage.

Le longeron 20 comprend un profilé en W qui s'imbrique dans le coin 40 en venant en engagement avec les faces d'appui 36, 38 obliques. Chaque extrémité du longeron 20 est pourvue d'un orifice 48 pour le passage d'une seule vis 46. Le serrage du longeron 20 s'effectue sur le bipode de la pièce de jonction 26, et est progressif au fur et à mesure du vissage de la vis 46.

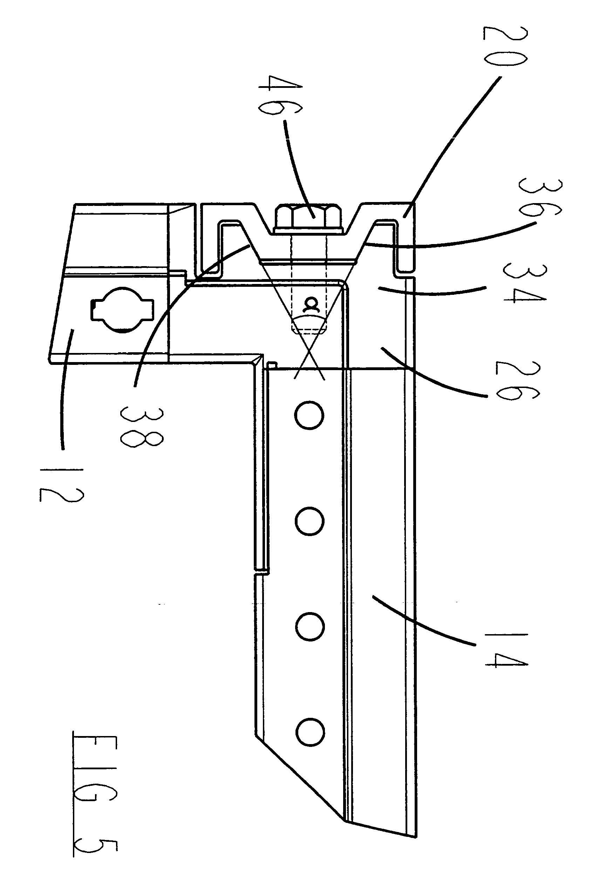

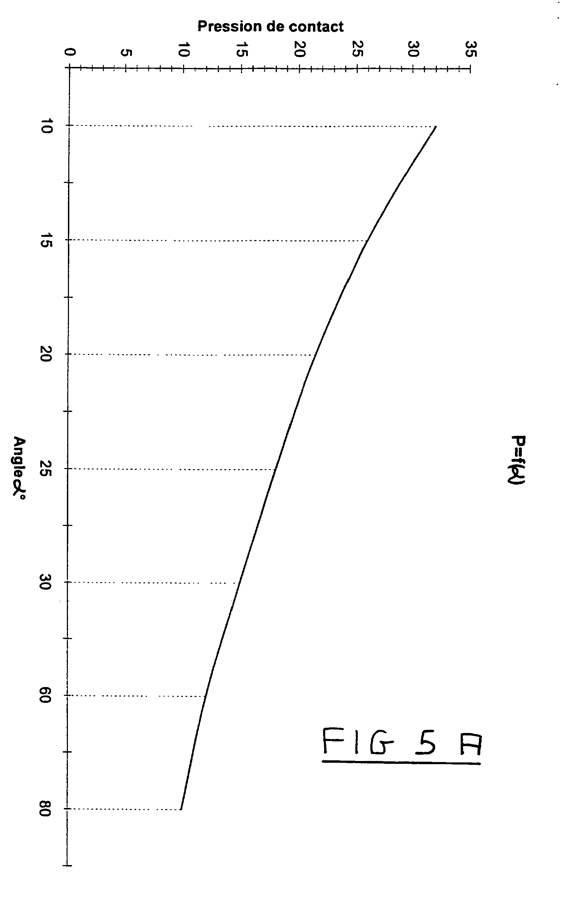

La figure 5A montre la variation de la pression de contact du longeron 20 sur les faces d'appui 36, 38 en fonction de la valeur de l'angle aigu du coin 40. On choisira de préférence un angle compris entre 20° et 40° permettant de concilier une bonne pression de contact en fin de vissage de la vis 46, avec la possibilité de démontage ultérieur du longeron 20. Pour des angles inférieurs à 20°, l'effet de coincement du longeron 20 dans le coin 40 risquerait d'empêcher ce démontage.
Pour des angles supérieurs à 40°, la diminution de la pression de contact serait d'autre part préjudiciable à la tenue mécanique du châssis 10.

Chaque élément d'emboîtement 28, 30 des pièces de jonction 26 est équipé d'un orifice taraudé 50, 52 dans lequel est introduit une vis 54 pour la fixation du bipode à la traverse 14 et au montant 12. Un autre trou taraudé 56 parallèle à l'orifice 50, est prévu dans la partie commune 32 de chaque pièce de jonction 26, et sert à la réception soit de l'anneau de levage 24 pour les pièces de jonction du haut, soit aux moyens de fixation du châssis 10 au socle 22 pour les pièces de jonction du bas.

Les longerons 20 sont réalisés en aluminium par filage, et les pièces de jonction 26 sont obtenues avantageusement par moulage métallique à base de zinc et de plomb.

Le montage du châssis 10 s'effectue de la manière suivante :

On assemble d'abord les deux cadres 16, 18 au moyen de huit pièces de jonction 26 reliant les quatre montants 12 aux quatre traverses 14 correspondantes . On visse les vis 54 dans les orifices 50, 52 pour assurer la rigidité de chaque cadre 16, 18. Il suffit ensuite de fixer sur les pièces de jonction 26, la paire de longerons 20 supérieurs, et la paire de longerons 20 inférieurs pour constituer le châssis 10. L'effet de serrage progressif des longerons 20 sur les coins 40 convergents des bipodes est déterminant pour l'obtention de la rigidité mécanique souhaitée.

Lors du raccordement des câbles de l'appareillage intégré dans l'armoire, il est facile de démonter un des longerons 20 par dévissage de deux vis 46 pour faciliter l'accès vers l'intérieur. L'enlèvement d'un longeron 20 est rapide, et est sans influence notable sur la tenue du châssis 10.

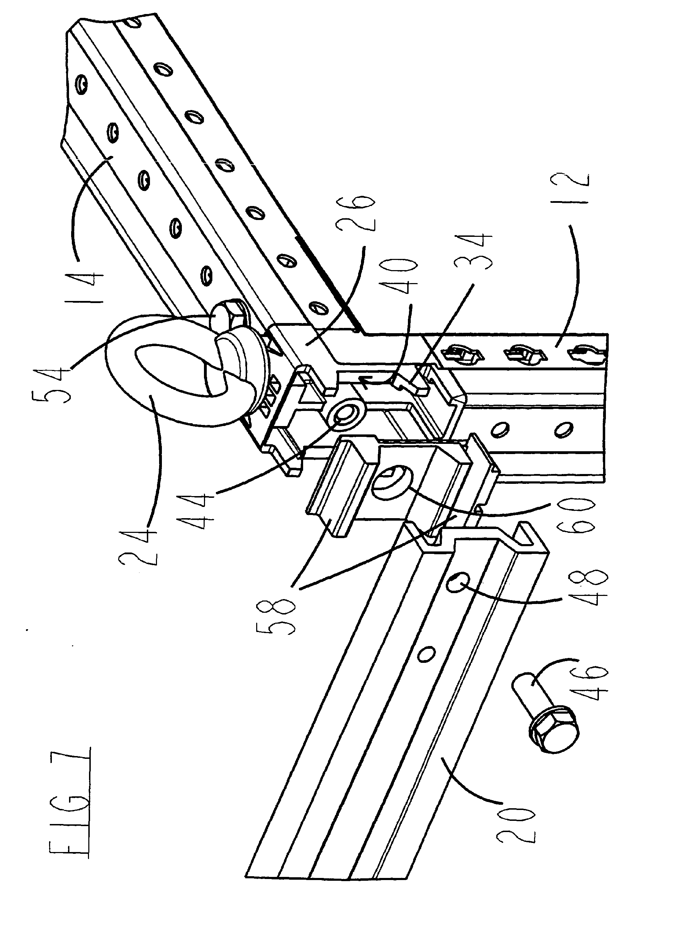

En référence à la figure 7, un joint d'étanchéité 58 moulé peut être interposé entre le longeron 20 et la partie commune 32 de chaque pièce de jonction 26 en fonction de l'indice d'étanchéité souhaité. Le joint 58 comporte un trou 60 central pour le passage de la vis de serrage 46.

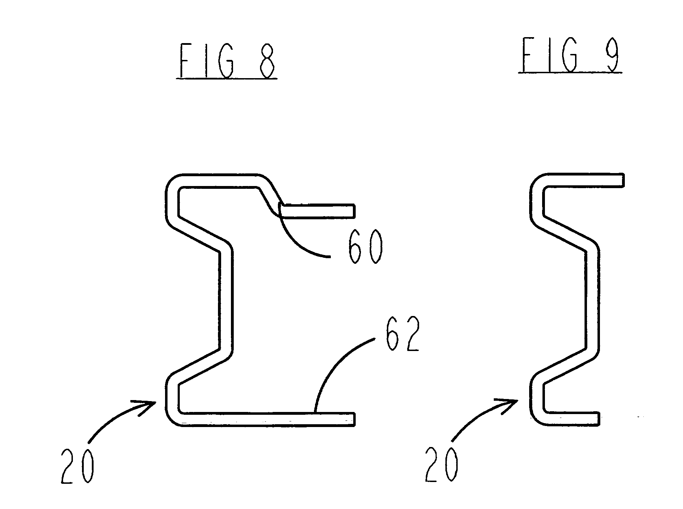

Les figures 8 et 9 montrent deux variantes de réalisation des longerons 20 en acier, obtenus par des opérations de découpage pliage. L'épaisseur de la tôle d'acier est dans ce cas inférieure à celle des longerons en aluminium selon les figures 1 à 7. Le profilé de la figure 8 est utilisé pour l'adaptation du toit de l'armoire, et comporte des ailes prolongées 60, 62.

## Revendications

1. Châssis à ossature métallique (10) en forme de parallélépipède rectangle, notamment pour une armoire électrique, comprenant :
- des montants (12) verticaux en forme de piliers assemblés à des traverses (14) s'étendant dans la direction de la profondeur du châssis (10) pour constituer sur les côtés opposés deux cadres (16, 18) quadrangulaires à base de profilés
- des longerons (20) horizontaux s'étendant dans la direction de la largeur de l'armoire pour assurer la liaison mécanique entre les deux cadres (16, 18), ayant à chaque extrémité un orifice (48) pour l'introduction d'une vis de serrage (46) ;
- des pièces de jonction (26) disposées aux angles du châssis (10) pour l'interconnexion des montants (12) aux traverses (14), chaque pièce de jonction (26) étant conformée selon un bipode comportant un premier élément d'emboîtement (28) disposé en équerre par rapport à un deuxième élément d'emboîtement (30), la partie commune (32) intermédiaire étant équipée de moyens de positionnement (34) comprenant au moins une paire de faces d'appui (36, 38) disposées en V qui délimitent un coin (40) à angle aigu ;
- une vis (46) de serrage du longeron (20) sur la partie commune (32) des pièces de jonction (26) ;
**caractérisé en ce que**
- le longeron (20) comporte un profilé en W de forme conjuguée avec le coin (40) dans lequel il s'imbrique, le serrage du longeron (20) sur le coin (40) étant progressif.

2. Châssis selon la revendication 1, **caractérisé en ce que** le coin (40) présente une section trapézoïdale, ouverte à l'avant et fermée à l'arrière par un fond (42).

3. Châssis selon la revendication 1 ou 2, **caractérisé en ce qu'**un trou (44) taraudé est ménagé au centre de la partie commune (32) pour recevoir la vis (46) de serrage.

4. Châssis selon la revendication 3, **caractérisé en ce que** le sommet fictif de l'angle aigu du coin (40) est placé dans l'alignement du trou (44) taraudé.

5. Châssis selon la revendication 1, **caractérisé en ce que** l'angle aigu du coin (40) est compris entre 20° et 40°.

6. Châssis selon l'une quelconque des revendications précédentes, **caractérisé en ce que** les longerons (20) sont réalisés en aluminium ou en acier.

7. Châssis selon l'une quelconque des revendications précédentes, **caractérisé en ce que** chaque pièce de jonction (26) comporte un trou taraudé (56) servant à la réception, soit d'un anneau de levage (24), soit à la fixation du châssis (10) au socle (22).

8. Châssis selon l'une quelconque des revendications précédentes, **caractérisé en ce qu'**un joint d'étanchéité (58) est interposé entre le longeron (20) et la partie commune (32) de chaque pièce de jonction (26).

## Claims

1. A metallic frame (10) in the form of a rectangular parallelepiped, in particular for an electrical cabinet, comprising:
- vertical uprights (12) in the form of pillars assembled to cross-members (14) extending in the depthwise direction of the frame (10) to constitute two quadrangular sub-frames (16, 18) formed by profiled sections on the opposite sides;
- horizontal girders (20) extending in the widthwise direction of the cabinet to form the mechanical junction between the two sub-frames (16, 18), having a hole (48) at each end for insertion of a fixing screw (46);
- joining parts (26) arranged at the corners of the frame (10) for interconnection of the uprights (12) to the cross-members (14), each joining part (26) being shaped as a bipod comprising a first fitting element (28) arranged to form a bracket with a second fitting element (30), the intermediate common part (32) being equipped with positioning means (34) comprising at least one pair of bearing faces (36, 38) arranged in a V-shape confining a corner-piece (40) with an acute angle;
- a screw (46) for securing the girder (20) to the common part (32) of the joining parts (26);
**characterized in that**
- the girder (20) has a W-shaped section of conjugate shape with the corner-piece (40) in which it fits, tightening of the girder (20) on the corner-piece (40) being progressive.

2. The frame according to claim 1, **characterized in that** the corner-piece (40) presents a trapezoid cross-section, open at the front and closed at the rear by a back face (42).

3. The frame according to claim 1 or 2, **characterized in that** a tapped hole (44) is arranged in the centre of the common part (32) to receive the fixing screw (46).

4. The frame according to claim 3, **characterized in that** the fictitious peak of the acute angle of the corner-piece (40) is placed in the alignment of the tapped hole (44).

5. The frame according to claim 1, **characterized in that** the acute angle of the corner-piece (40) is comprised between 20° and 40°.

6. The frame according to any one of the foregoing claims, **characterized in that** the girders (20) are made of aluminium or steel.

7. The frame according to any one of the foregoing claims, **characterized in that** each joining part (26) comprises a tapped hole (56) either for receiving a hoisting ring (24) or for fixing the frame (10) to the support base (22).

8. The frame according to any one of the foregoing claims, **characterized in that** a seal (58) is fitted between the girder (20) and the common part (32) of each joining part (26).

## Patentansprüche

1. Rahmengestell mit kastenförmigem Metallgerüst (10), insbesondere für einen Schaltschrank, das
- senkrechte Ständer (12), die als Stützpfeiler ausgebildet und auf in der Tiefenebene des Rahmengestells (10) angeordneten Traversen (14) befestigt sind, um zwei auf den beiden gegenüberliegenden Seiten angeordnete Rechteck-Profilrahmen (16, 18) zu bilden,
- waagerechte Querholme (20), die zur Gewährleistung der mechanischen Verbindung zwischen den beiden Rahmen (16, 18) in der Breitenebene des Schranks angeordnet sind, wobei an jedem Ende der Querholme eine Öffnung (48) zur Durchführung einer Spannschraube (46) ausgebildet ist;
- an den Ecken des Rahmengestells (10) angeordnete Verbindungsteile (26) zur Verbindung der Ständer (12) mit den Traversen (14), welche Verbindungsteile (26) als zweischenkelige Winkeleisen mit einem rechtwinklig zu einem zweiten Steckelement (30) angeordneten ersten Steckelement (28) ausgebildet sind, wobei am gemeinsamen Zwischenabschnitt (32) des Winkeleisens Positioniermittel (34) ausgebildet sind, die mindestens zwei V-förmige, einen spitzwinkeligen Keilausschnitt (40) bildende Auflageflächen (36, 38) umfassen,
- und eine Spannschraube (46) zur Befestigung des Querholms (20) auf dem Zwischenabschnitt (32) der Verbindungsteile (26) umfasst,
**dadurch gekennzeichnet, dass**
- der Querholm (20) ein W-förmiges Profil aufweist, dessen Form an den Keilausschnitt (40) angepasst ist, in den der Holm eingreift, wobei sich der Anpressdruck des Querholms (20) im Keilausschnitt (40) stufenlos erhöhen lässt.

2. Rahmengestell nach Anspruch 1, **dadurch gekennzeichnet, dass** der Keilausschnitt (40) einen trapezförmigen Querschnitt aufweist, der zur Vorderseite hin geöffnet und an der Rückseite durch einen Boden (42) verschlossen ist.

3. Rahmengestell nach Anspruch 1 oder 2, **dadurch gekennzeichnet, dass** in der Mitte des Zwischenabschnitts (32) eine Gewindebohrung (44) zur Aufnahme der Spannschraube (46) ausgebildet ist.

4. Rahmengestell nach Anspruch 3, **dadurch gekennzeichnet, dass** der fiktive Scheitelpunkt des spitzwinkeligen Keilausschnitts (40) in einer Flucht mit der Gewindebohrung (44) angeordnet ist.

5. Rahmengestell nach Anspruch 1, **dadurch gekennzeichnet, dass** der spitze Winkel des Keilausschnitts (40) zwischen 20 und 40° beträgt.

6. Rahmengestell nach irgendeinem der vorhergehenden Ansprüche, **dadurch gekennzeichnet, dass** die Querholme (20) aus Aluminium oder Stahl bestehen.

7. Rahmengestell nach irgendeinem der vorhergehenden Ansprüche, **dadurch gekennzeichnet, dass** in jedem Verbindungsteil (26) eine Gewindebohrung (56) ausgebildet ist, die entweder zur Aufnahme eines Tragrings (24) oder zur Befestigung des Rahmengestells (10) auf dem Sockel (22) dient.

8. Rahmengestell nach irgendeinem der vorhergehenden Ansprüche, **dadurch gekennzeichnet, dass** zwischen dem Querholm (20) und dem Zwischenabschnitt (32) jedes Verbindungsteils (26) eine Dichtung (58) eingesetzt ist.
